# FASCICULE DE BREVET EUROPEEN

(11) **EP 2 545 203 B1**
(45) Date de publication et mention de la délivrance du brevet: **12.10.2016**
(21) Numéro de dépôt: 11707434.4
(22) Date de dépôt: 11.03.2011
(51) Int. Cl.: C25B 1/04, C25B 9/04, C25B 9/18

(54) **DISPOSITIF FORMANT INTERCONNECTEUR ELECTRIQUE ET FLUIDIQUE POUR REACTEUR D'ELECTROLYSE DE L'EAU A HAUTE TEMPERATURE**
VORRICHTUNG ZUR HERSTELLUNG EINES ELEKTRO- UND FLUIDVERBINDERS FÜR EINEN REAKTOR FÜR HOCHTEMPERATURWASSERELEKTROLYSE
DEVICE FORMING AN ELECTRIC AND FLUID INTERCONNECTOR FOR A REACTOR FOR HIGH-TEMPERATURE WATER ELECTROLYSIS

(30) Priorité: 12.03.2010 FR 1051785
(43) Date de publication de la demande: 16.01.2013
(73) Titulaire: Commissariat à l'Énergie Atomique et aux Énergies Alternatives, 75015 Paris (FR)
(72) Inventeur: RIGAL, Emmanuel, F-38950 St Martin Le Vinoux (FR)
(74) Mandataire: Ilgart, Jean-Christophe
(86) Numéro de dépôt international: PCT/EP2011/053727
(87) Numéro de publication internationale: WO 2011/110678

(56) Documents cités:
- EP-A1- 1 482 585
- WO-A1-01/48852
- WO-A1-2007/021054

## Description

### DOMAINE TECHNIQUE

L'invention concerne un nouveau dispositif formant interconnecteur électrique et fluidique réalisé en métal pour réacteur d'électrolyse de l'eau à haute température.

Elle a trait également à un réacteur comprenant un tel interconnecteur, et plus particulièrement un électrolyseur de vapeur d'eau à haute température (EHT) aussi appelé électrolyseur de vapeur d'eau à haute température (EVHT).

### ART ANTÉRIEUR

Un réacteur électrochimique comprend usuellement un ou plusieurs empilements de cellules électrochimiques élémentaires séparées entre elles par un interconnecteur électrique et fluidique.

Dans le cas d'un électrolyseur de l'eau à haute température (EHT) ou d'une pile à combustible, une cellule électrochimique élémentaire est formée d'un électrolyte, d'une électrode à hydrogène et d'une électrode à oxygène, l'électrolyte étant intercalé entre les deux électrodes. L'électrolyte est étanche au gaz, isolant électronique et conducteur ionique. Les électrodes sont en matériau poreux et conducteurs électroniques.

Les interconnecteurs doivent être en contact électrique avec les électrodes. Ils comportent, aux interfaces avec celles-ci, des espaces de circulation des fluides appelés compartiments à oxygène et à hydrogène/vapeur d'eau. Il faut s'assurer d'une étanchéité à la périphérie de ces compartiments. La circulation des fluides dans ces compartiments se fait dans une veine fluide au contact de la surface des électrodes et qui s'écoule parallèlement à celles-ci.

On utilise généralement dans ces compartiments des éléments destinés à améliorer le contact électrique entre les électrodes et l'interconnecteur. Il peut s'agir, côté électrode à hydrogène, de grilles, de mousses ou de dépôts métalliques. Côté électrode à oxygène, il s'agit généralement de couches de contact en céramique déposées sur l'interconnecteur par exemple sous forme d'une suspension.

Dans le cas des électrolyseurs EHT ou des piles à combustible, le réacteur électrochimique fonctionne à des températures élevées, d'au moins 450°C typiquement comprises entre 700 et 1000°C.

Dans une pile à combustible, on injecte du dihydrogène dans le compartiment à hydrogène et de l'air dans le compartiment à oxygène. Le dihydrogène est oxydé en vapeur d'eau et un courant est généré. De l'oxygène est consommé dans le compartiment à oxygène.

Dans un électrolyseur à haute température, on injecte de la vapeur d'eau dans le compartiment à hydrogène et on applique une tension électrique aux bornes de chaque empilement. La dissociation des molécules d'eau sous forme vapeur est réalisée à l'interface entre l'électrode à hydrogène (cathode) et l'électrolyte : cette dissociation produit du gaz dihydrogène et des ions oxygène. Le dihydrogène est collecté et évacué en sortie de compartiment à hydrogène. Les ions oxygène migrent à travers l'électrolyte et se recombinent en dioxygène à l'interface entre l'électrolyte et l'électrode à oxygène (anode). Le gaz dioxygène est collecté et évacué en sortie de compartiment à oxygène. Dans certains électrolyseurs, il est prévu d'injecter, c'est-à-dire faire circuler, un gaz drainant dans le compartiment à oxygène, ce qui facilite l'évacuation du dioxygène produit.

Pour des raisons de coût, de résistance à l'oxydation et de facilité de mise en oeuvre, les interconnecteurs sont métalliques, généralement des aciers ou des alliages de nickel formant en surface une couche d'oxyde riche en chrome. Cette couche d'oxyde riche en chrome protège efficacement le matériau constitutif de l'interconnecteur de l'oxydation et possède une conductivité électrique acceptable.

Un des problèmes rencontrés est que les oxydes riches en chrome qui se forment dans la couche à la surface des interconnecteurs sont volatils. Or, ces vapeurs de chrome émises ont un effet négatif sur le fonctionnement de la cellule. En effet, elles sont piégées par l'électrode à oxygène sous forme d'oxydes solides, ce qui entraîne un colmatage progressif des pores de l'électrode à oxygène. Ce colmatage progressif empêche le gaz (air dans une pile à combustible, oxygène dans un électrolyseur) de circuler, ce qui dégrade les performances électrochimiques du réacteur. On constate que le piégeage peut être plus important à l'interface entre l'électrolyte et l'électrode à oxygène. Ce problème est particulièrement connu dans une pile à combustible sous le nom d'empoisonnement au chrome [1]. Ce problème est également rencontré dans un électrolyseur à haute température.

Pour résoudre ce problème d'empoisonnement au chrome, plusieurs solutions ont déjà été décrites dans la littérature.

Des élaborateurs de matériaux ont mis au point des alliages spécifiques moins émetteurs de vapeurs chromées que les alliages traditionnels, mais cela est insuffisant : il subsiste toujours des vapeurs chromées nuisibles.

Une autre solution décrite consiste à définir une formulation d'électrodes à oxygène moins sensibles à l'empoisonnement. Cette solution se fait au détriment de la performance électrochimique.

La solution la plus développée consiste à déposer, sur les interconnecteurs, des revêtements destinés à empêcher la vaporisation des oxydes de chrome. Ces revêtements doivent être étanches, adhérents et stables à haute température pendant de longues durées. Ils doivent former une barrière au chrome présent dans l'alliage sous-jacent. De surcroît, ils doivent présenter une bonne conductivité électronique. De nombreux exemples de revêtements existent dans la littérature, mais leur efficacité à long terme n'est pas démontrée. En outre, ces revêtements représentent un coût supplémentaire.

Le but de l'invention est de pallier les inconvénients des solutions précitées et donc de proposer une nouvelle solution efficace et à moindre coût au problème de l'empoisonnement au chrome dans les réacteurs d'électrolyse de l'eau (électrolyseurs EHT) sans nuire à leurs performances électrochimiques.

Le document EP1482585 décrit un séparateur avec une structure en trois couches formé en laminant successivement une première plaque avec des trous, une deuxième plaque, intermédiaire, à structure cannelée ou similaire, et une troisième plaque plate; les trois plaques sont fabriquées en tôle métallique.

### EXPOSÉ DE L'INVENTION

Pour ce faire, l'invention a pour objet un dispositif formant interconnecteur électrique et fluidique pour réacteur d'électrolyse de l'eau à haute température, consistant en une pièce métallique d'épaisseur constante délimitée par deux plans parallèles, ladite pièce métallique comprenant intérieurement une chambre et une pluralité de trous répartis sur la surface, sensiblement perpendiculaires à l'un des deux plans et débouchant à la fois sur ce dernier et dans la chambre, ladite chambre débouchant en outre à l'extérieur dans une zone distincte du plan sur lequel débouche la pluralité de trous.

Par « haute température », on comprend dans le cadre de l'invention des températures d'au moins 450°C, typiquement comprises entre 700 et 1000°C.

Selon un mode de réalisation préféré, il est prévu un dispositif formant interconnecteur électrique et fluidique pour réacteur électrochimique, comprenant deux plaques métalliques assemblées entre elles à leur périphérie, la première plaque comprenant une pluralité de trous répartis sur la surface, dans le sens de l'épaisseur, sensiblement perpendiculaires à la surface de plaque et débouchant sur ses deux faces planes, la deuxième plaque comprenant au moins une rainure débouchant sur l'une des faces de la première plaque en regard de la pluralité de trous, l'espace délimité entre la rainure et la première plaque constituant la chambre.

Autrement dit, selon l'invention, on perce la face de l'interconnecteur en contact avec l'électrode à oxygène de la cellule électrochimique d'une multitude de trous. Les trous permettent d'obtenir, au niveau de la chambre à oxygène, une évacuation de l'oxygène selon une direction sensiblement perpendiculaire à l'électrode à oxygène.

De cette façon, les vapeurs d'oxyde de chrome susceptibles d'être émises par l'interconnecteur sont emportées par l'oxygène vers le dispositif de collectage. Les vapeurs d'oxyde de chrome rencontrent donc très peu l'électrode à oxygène et l'interface entre l'électrolyte et l'électrode à oxygène.

L'empoisonnement au chrome est ainsi très réduit voire supprimé. On peut donc conserver des formulations d'électrodes très performantes d'un point de vue électrochimique même si elles sont sensibles à l'empoisonnement au chrome.

Autrement dit encore, la solution selon l'invention propose une architecture d'interconnecteur pour un électrolyseur EHT qui ne nécessite pas de revêtements à fonction de barrière au chrome sur l'interconnecteur, bien que le matériau d'interconnecteur puisse être un matériau formant des oxydes riches en chrome, donc susceptible d'émettre des vapeurs chromées.

La dégradation des performances de l'électrode à oxygène liée à l'empoisonnement chrome est réduite. Il s'en suit de meilleures performances de l'électrolyseur EHT, une amélioration de sa durée de vie et, au final, un coût de production de l'hydrogène moindre. Il n'y a plus de nécessité de réaliser des revêtements barrière au chrome.

Selon un mode de réalisation, la deuxième plaque comprend également une deuxième pluralité de rainures parallèles entre elles et régulièrement espacées et débouchant sur l'une des faces de la première plaque en regard de la pluralité trous. La fonction d'évacuation de l'oxygène hors de l'empilement de cellules est plus efficace.

Avantageusement, la deuxième plaque comprend une autre pluralité de rainures parallèles entre elles et régulièrement espacées et débouchant sur l'extérieur. Cette autre pluralité de rainures permet ainsi d'amener la vapeur d'eau efficacement à la cathode et de récupérer également efficacement l'hydrogène produit.

Les deux plaques sont de préférence assemblées entre elles par soudure ou brasure.

Les plaques sont réalisées à partir d'une tôle en alliage résistant à l'oxydation, tel qu'un acier inoxydable ferritique, qui est un très bon conducteur électrique et qui forme des couches d'oxydes elles-mêmes conductrices.

Les trous sont de préférence à section circulaire avec un diamètre compris entre 0.05 et 5 mm, de préférence compris entre 0.1 et 1 mm.

La distance entre le centre de deux trous adjacents peut être comprise entre 0.1 et 10 mm, de préférence comprise entre 0.2 et 5 mm. Le nombre de trous dépend de la taille de la cellule d'électrolyse à réaliser.

Les trous sont avantageusement alignés selon des lignes parallèles entre elles et régulièrement espacées. Pour optimiser encore l'évacuation de l'oxygène produit, on peut ainsi faire correspondre ces lignes de trous avec la pluralité de rainures de la deuxième plaque en regard.

L'invention concerne également un réacteur d'électrolyse de l'eau à haute température comprenant au moins un empilement de cellules d'électrolyse élémentaires formées chacune d'une cathode (électrode à hydrogène), d'une anode (électrode à oxygène) et d'un électrolyte intercalé entre la cathode et l'anode, un interconnecteur tel que décrit précédemment étant agencé entre deux cellules élémentaires adjacentes, l'interconnecteur étant en contact électrique avec une électrode d'une des deux cellules élémentaires et une électrode de l'autre des deux cellules élémentaires.

La première plaque est de préférence en contact mécanique direct avec une anode d'une des deux cellules élémentaires.

La deuxième plaque de l'interconnecteur peut être également en contact mécanique direct avec une cathode d'une des deux cellules élémentaires.

La première plaque de l'interconnecteur (plaque à trous) est de préférence en contact mécanique direct avec un élément poreux en matériau conducteur électrique, l'élément poreux étant lui-même en contact direct avec une anode d'une des deux cellules élémentaires. Un élément poreux préféré est une couche mince de manganite de Lanthane dopé au strontium (LSM), déposée sur l'électrode. Ce matériau LSM est exempt de chrome et conducteur électronique. Il peut jouer le rôle de couche de contact.

L'application principale visée du réacteur est la production d'hydrogène.

### BRÈVE DESCRIPTION DES DESSINS

D'autres avantages et caractéristiques ressortiront mieux à la lecture de la description détaillée faite ci-dessous en référence aux figures suivantes parmi lesquelles :
- la figure 1 est une vue en coupe longitudinale d'une partie d'un électrolyseur à haute température comprenant des interconnecteurs selon l'état de l'art,
- la figure 2 est une vue en coupe d'une partie d'un électrolyseur à haute température comprenant des interconnecteurs selon l'invention,
- la figure 3 est une vue en coupe transversale d'un interconnecteur selon l'invention comprenant les deux plaques selon les figures 4 à 6 assemblées entre elles à leur périphérie,
- la figure 4 est une vue de dessus d'une des plaques d'un interconnecteur selon l'invention,
- la figure 4A est une vue en coupe transversale selon AA de la plaque de la figure 4,
- la figure 5 est une vue de dessous de l'autre plaque d'un interconnecteur selon l'invention,
- la figure 5A est une vue en coupe transversale selon AA de la plaque des figures 5 et 6,
- la figure 6 est une vue de dessus de l'autre plaque d'un interconnecteur selon l'invention.

### EXPOSÉ DÉTAILLÉ DE MODES DE RÉALISATION PARTICULIERS

Par souci de clarté, les mêmes éléments communs à un électrolyseur EHT selon l'état de l'art et selon l'invention sont désignés par les mêmes références.

Les symboles et les flèches de parcours de vapeur d'eau, dihydrogène et d'oxygène sont montrés dans l'ensemble des figures à des fins de clarté.

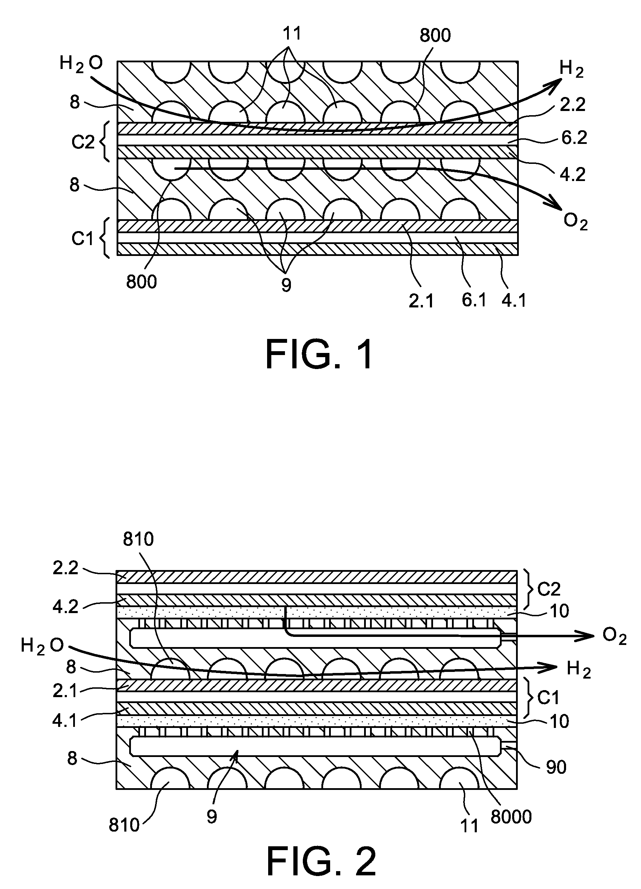

La figure 1 représente une vue en coupe d'un électrolyseur de vapeur d'eau à haute température selon l'état de l'art. Cet électrolyseur EHT selon la présente invention comportant une pluralité de cellules élémentaires C1, C2... empilées.

Chaque cellule élémentaire comporte un électrolyte disposé entre une cathode et une anode.

La cellule C1 comporte une cathode 2.1 et une anode 4.1 entre lesquelles est disposé un électrolyte 6.1, généralement d'épaisseur 100 µm pour les cellules dites à électrolyte support et d'épaisseur de quelques µm pour les cellules dites à cathode support.

La cellule C2 comporte une cathode 2.2 et une anode 4.2 entre lesquelles est disposé un électrolyte 6.2.

Les cathodes 2.1, 2.2 et les anodes 4.1, 4.2 sont réalisées en matériau poreux et ont par exemple une épaisseur de 40 µm chacune pour les cellules dites à électrolyte support et une épaisseur de l'ordre de 500 µm et 40µm respectivement pour les cellules dites à cathode support.

La cathode 2.1 de la cellule C1 est reliée électriquement à l'anode 4.2 de la cellule C2 par un interconnecteur 8, constituée par une seule plaque, venant en contact mécanique direct avec la cathode 2.1 et l'anode 4.2. Par ailleurs, elle permet l'alimentation électrique de la cathode 2.1 et de l'anode 4.2.

Tous les électrolytes utilisés sont de type solide.

Chaque interconnecteur 8 définit avec l'anode et la cathode adjacentes des canaux pour la circulation de fluides. Plus précisément, ils définissent des compartiments anodiques 9 dédiés à la circulation des fluides (au moins de l'oxygène) au niveau de chaque anode 4.1, 4.2... 4.n et des compartiments cathodiques 11 dédiés à la circulation des fluides (vapeur d'eau et dihydrogène) au niveau de chaque cathode 2.1, 2.2... 2.n.

Dans un électrolyseur EHT selon l'état de l'art, tel que représenté en figure 1, un interconnecteur 8 est constitué d'une seule plaque en acier ferritique inoxydable à 20% de chrome rainurée des deux côtés. Le collectage de l'oxygène produit est réalisé à l'extrémité des rainures 800 qui délimitent avec l'anode 4.1, 4.2... 4.n avec laquelle l'interconnecteur 8 est en contact direct les compartiments anodiques 9. Les rainures 800 sont de forme hémicylindrique. Leur largeur est de 1 mm et leur longueur de 150 mm.

Les compartiments cathodiques 11 sont délimités par les rainures 800 de mêmes formes et mêmes dimensions que celles délimitant les compartiments anodiques 9.

Un problème de tels interconnecteurs 8 avec la circulation des gaz prévue dans un électrolyseur selon l'état de l'art est que les vapeurs de chrome qu'ils sont susceptibles d'émettre sont piégées par les anodes 4.1, 4.2... 4.n, ce qui entraîne un colmatage progressif de ces dernières et par conséquent une baisse des performances électrochimiques.

La figure 2 représente une vue en coupe d'un électrolyseur de vapeur d'eau à haute température selon l'invention.

Un interconnecteur 8 selon l'invention comprend, sur un côté, des rainures hémicylindriques 810 réparties sur la surface, de largeur unitaire égale à 1 mm et de longueur unitaire égale à 150 mm qui délimitent un compartiment cathodique 11 par lequel on fait circuler la vapeur d'eau et on récupère l'hydrogène produit.

Sur le côté opposé, l'interconnecteur 8 selon l'invention comprend une pluralité de trous 8000 répartis sur la surface, sensiblement perpendiculaires à celle-ci dans le sens de l'épaisseur et débouchant sur une chambre 9 réalisée intérieurement et débouchant sur l'épaisseur (ouverture 90). La chambre 9 est le compartiment anodique par lequel on récupère l'oxygène produit qui est évacué par l'ouverture 90.

Les trous 8000 réalisés sont de préférence de section circulaire, ont un diamètre de l'ordre de 0.3 mm.

Un élément poreux 10 en matériau conducteur électrique est en contact mécanique direct d'une part avec l'interconnecteur selon l'invention 8 et d'autre part avec chaque anode 4.1, 4.2. Cet élément poreux est avantageusement un dépôt poreux de manganite de lanthane dopé au strontium réalisé directement à l'aide d'une barbotine sur la face sur laquelle les trous 8000 débouchent.

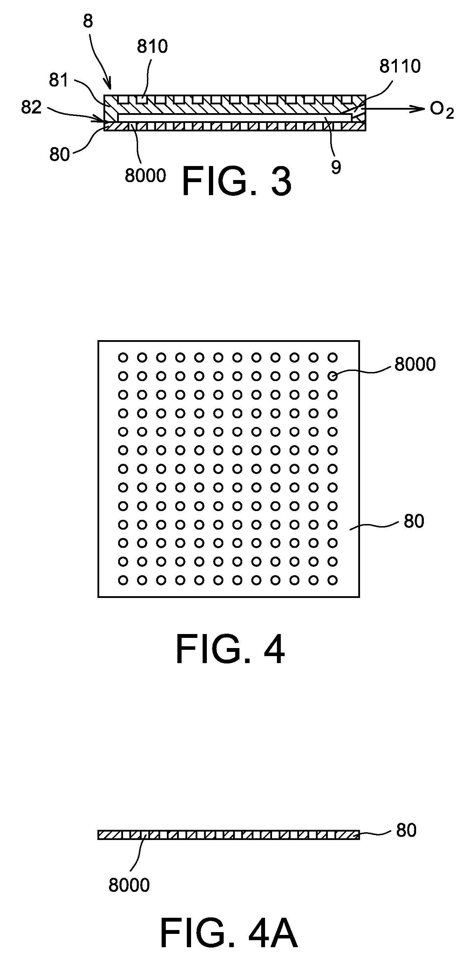

Les figures 3 à 6 montrent un interconnecteur 8 constitué à partir de deux plaques 80, 81.

Comme montré en figure 3, ces deux plaques 80, 81 sont assemblées entre elles à leur périphérie par soudure 82. Ces deux plaques 80, 81 sont réalisées à partir de tôles en acier ferritique inoxydable à 22% de chrome.

La première plaque 80 comprend une pluralité de trous 8000 à section circulaire, dans le sens de son épaisseur, sensiblement perpendiculaires et débouchant sur ses deux faces (figure 4A). Ces trous 8000 sont alignés selon des lignes parallèles entre elles et régulièrement espacées (figure 4). Le diamètre unitaire de ces trous est de l'ordre de 0.3 mm. Deux trous 8000 adjacents sont espacés entre eux d'environ 0.6 mm.

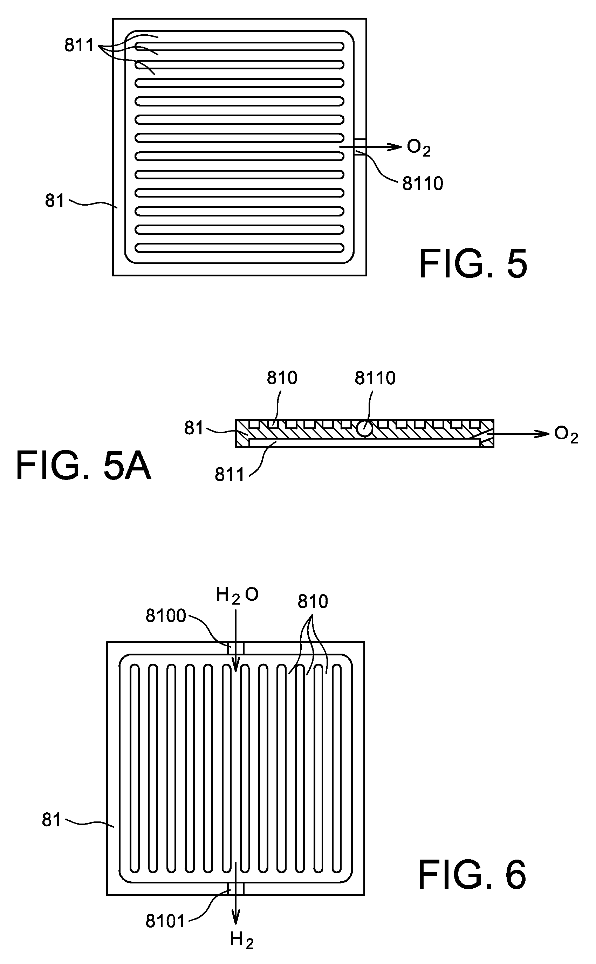

La deuxième plaque 81 comprend sur une de ses faces une pluralité de rainures 810 usinées réparties sur la surface en étant parallèles entre elles et régulièrement espacées. Ces rainures 810 débouchent sur deux ouvertures 8100, 8101 opposées et dans l'épaisseur : ces ouvertures permettent respectivement l'entrée de la vapeur d'eau et la sortie du dihydrogène produit (figure 6). L'autre face de la deuxième plaque 81 comprend une pluralité de rainures 811 également réparties sur la surface en étant parallèles entre elles et régulièrement espacées. Ces rainures 811 débouchent sur une ouverture 8110 qui permet l'évacuation de l'oxygène produit (figure 5). Autrement dit, la chambre 9 est ici délimitée d'une part par les trous 8000 et d'autre part les rainures 811 qui sont chacune en regard d'une rangée de trous 8000.

L'orientation de ces rainures 811 est perpendiculaire à l'orientation des rainures 810 sur l'autre face (figure 5A).

Bien que non représentée, on pourrait prévoir une autre ouverture à l'opposée de l'ouverture 90, 8110 prévue pour évacuer l'oxygène produit dans l'interconnecteur 8 selon l'invention.

Cette autre ouverture permettrait de faire circuler un gaz drainant pour favoriser l'évacuation de l'oxygène produit.

D'autres réalisations peuvent être envisagées sans pour autant sortir du cadre de l'invention.

Par exemple, l'interconnecteur selon l'invention peut très bien être réalisé à partir d'une seule pièce monobloc avec une chambre constituée d'une pluralité de perçages parallèles entre eux, une partie de la pluralité des trous débouchant dans chaque perçage, l'ensemble des perçages débouchant sur une ouverture commune par laquelle on récupère l'oxygène à évacuer.

En plus, si cette ouverture de sortie de la chambre sur l'extérieur peut être réalisée dans l'épaisseur de la pièce, telle que celle représentée et référencée 90, on peut aussi prévoir une ouverture de sortie débouchant sur l'extérieur dans une autre zone distincte.

Enfin, bien que décrit en référence à l'électrolyse de l'eau à haute température ; l'invention qui permet de réduire voire supprimer l'empoisonnement au chrome peut tout aussi bien s'appliquer à tout système électrochimique fonctionnant à haute température et générant du dioxygène.

**Référence citée [1]:** JW Fergus: "Effect of cathode and electrolyte transport properties on chromium poisoning in solid oxide fuel cells", International Journal of Hydrogen Energy 32 (2007), pages 3664 - 3671.

## Revendications

1. Dispositif (8) formant interconnecteur électrique et fluidique pour réacteur d'électrolyse de l'eau, consistant en une pièce métallique d'épaisseur constante délimitée par deux plans parallèles, ladite pièce métallique comprenant :
- intérieurement une chambre
- une pluralité de trous répartis sur la surface, sensiblement perpendiculaires à l'un des deux plans et débouchant à la fois sur ce dernier et dans ladite chambre,
ladite chambre étant réalisée à l'intérieur de ladite pièce métallique et débouchant en outre à l'extérieur dans une zone distincte du plan sur lequel débouche la pluralité de trous.

2. Interconnecteur (8) électrique et fluidique selon la revendication 1, comprenant deux plaques (80, 81) métalliques assemblées entre elles à leur périphérie, la première plaque (80) comprenant la pluralité de trous (800) répartis sur la surface, sensiblement perpendiculaires à son épaisseur et débouchant sur ses deux faces planes, la deuxième plaque (81) comprenant au moins une rainure (811) débouchant sur l'une des faces de la première plaque en regard de la pluralité de trous, l'espace délimité entre la rainure et la première plaque constituant la chambre (9).

3. Interconnecteur (8) électrique et fluidique selon la revendication 2, dans lequel la deuxième plaque (81) comprend une pluralité de rainures (811) parallèles entre elles et régulièrement espacées et débouchant sur l'une des faces de la première plaque en regard de la pluralité de trous.

4. Interconnecteur (8) électrique et fluidique selon la revendication 2 ou 3, dans lequel la deuxième plaque (81) comprend une autre pluralité de rainures (810) parallèles entre elles et régulièrement espacées et débouchant sur l'extérieur.

5. Interconnecteur (8) électrique et fluidique selon l'une des revendications 2 à 4, dans lequel les deux plaques sont assemblées entre elles par soudure ou brasure.

6. Interconnecteur (8) électrique et fluidique selon l'une des revendications précédentes, dans lequel la pièce métallique est réalisée à partir d'une tôle en alliage résistant à l'oxydation, tel qu'un acier inoxydable ferritique.

7. Interconnecteur (8) électrique et fluidique selon l'une des revendications précédentes, dans lequel les trous sont à section circulaire avec un diamètre compris entre 0.05 et 5 mm, de préférence compris entre 0.1 et 1 mm.

8. Interconnecteur (8) électrique et fluidique selon l'une des revendications précédentes, dans lequel la distance entre le centre de deux trous adjacents est comprise entre 0.1 et 10 mm, de préférence compris entre 0.2 et 5 mm.

9. Interconnecteur (8) électrique et fluidique selon l'une des revendications précédentes, dans lequel les trous sont alignés selon des lignes parallèles entre elles et régulièrement espacées.

10. Réacteur d'électrolyse de l'eau à haute température, comprenant au moins un empilement de cellules d'électrolyse élémentaires (C1, C2...Cn) formées chacune d'une cathode (2.1, 2.2), d'une anode (4.1, 4.2) et d'un électrolyte (6.1, 6.2) intercalé entre la cathode et l'anode, un interconnecteur (8) selon l'une des revendications 2 à 9 étant agencé entre deux cellules élémentaires adjacentes, l'interconnecteur (8) étant en contact électrique avec une électrode d'une des deux cellules élémentaires et une électrode de l'autre des deux cellules élémentaires.

11. Réacteur selon la revendication 10, dans lequel la deuxième plaque (81) de l'interconnecteur est en contact mécanique direct avec la cathode (2.1, 2.2) d'une (C1) des deux cellules élémentaires.

12. Réacteur selon la revendication 10 ou 11, dans lequel la première plaque (80) de l'interconnecteur est en contact mécanique direct avec une anode d'une des deux cellules élémentaires.

13. Réacteur selon la revendication 10 ou 11, dans lequel la première plaque (80) de l'interconnecteur est en contact mécanique direct avec un élément poreux (10) en matériau conducteur électrique, l'élément poreux (10) étant lui-même en contact direct avec une anode (4.1, 4.2) d'une (C2) des deux cellules élémentaires.

14. Réacteur selon la revendication 13, dans lequel l'élément poreux (10) est une couche mince de manganite de Lanthane dopé au strontium, déposée sur l'anode (4.1, 4.2).

15. Application d'un réacteur selon l'une des revendications 10 à 14, pour la production d'hydrogène.

## Patentansprüche

1. Vorrichtung (8) zum Bilden eines elektrischen und fluidischen Zwischenverbinders für einen Wasserelektrolysereaktor, umfassend ein metallisches Werkstück mit konstanter Dicke, das durch zwei parallele Ebenen begrenzt ist, wobei das metallische Werkstück umfasst:
- innerhalb einer Kammer
- eine Mehrzahl von über die Oberfläche verteilten Löchern, die im Wesentlichen orthogonal zu einer der zwei Ebenen sind und gleichzeitig an dieser Letztgenannten und in der Kammer münden,
wobei die Kammer innerhalb des metallischen Werkstücks realisiert ist und ferner außen in einer anderen Zone der Ebene mündet, an der die Mehrzahl der Löcher mündet.

2. Elektrischer und fluidischer Zwischenverbinder (8) nach Anspruch 1, umfassend zwei metallische Scheiben (80, 81), die an ihrem Umfang miteinander verbunden sind, wobei die erste Scheibe (80) die Mehrzahl von Löchern (800) über die Oberfläche verteilt umfasst, die im Wesentlichen orthogonal zu ihrer Dicke sind und an ihren zwei ebenen Flächen münden, wobei die zweite Scheibe (81) wenigstens eine Rille (811) umfasst, die an einer der Flächen der ersten Scheibe gegenüber der Mehrzahl von Löchern mündet, wobei der zwischen der Rille und der ersten Scheibe begrenzte Raum die Kammer (9) bildet.

3. Elektrischer und fluidischer Zwischenverbinder (8) nach Anspruch 2, wobei die zweite Scheibe (81) eine Mehrzahl von Rillen (811) umfasst, die zueinander parallel und gleichmäßig beabstandet sind und an einer der Flächen der ersten Scheibe gegenüber der Mehrzahl von Löchern münden.

4. Elektrischer und fluidischer Zwischenverbinder (8) nach Anspruch 2 oder 3, wobei die zweite Scheibe (81) eine weitere Mehrzahl von Rillen (810) umfasst, die zueinander parallel und gleichmäßig beabstandet sind und an der Außenseite münden.

5. Elektrischer und fluidischer Zwischenverbinder (8) nach einem der Ansprüche 2 bis 4, wobei die zwei Scheiben durch Schweißen oder Löten aneinander angebracht sind.

6. Elektrischer und fluidischer Zwischenverbinder (8) nach einem der vorhergehenden Ansprüche, wobei das metallische Werkstück aus einem Blech einer oxidationsfesten Legierung realisiert ist, beispielsweise einem nicht oxidierenden Ferritstahl.

7. Elektrischer und fluidischer Zwischenverbinder (8) nach einem der vorhergehenden Ansprüche, wobei die Löcher einen kreisförmigen Querschnitt mit einem Durchmesser aufweisen, der zwischen 0,05 und 5 mm enthalten ist, vorzugsweise zwischen 0,1 und 1 mm enthalten ist.

8. Elektrischer und fluidischer Zwischenverbinder (8) nach einem der vorhergehenden Ansprüche, wobei der Abstand zwischen der Mitte von zwei benachbarten Löchern zwischen 0,1 und 10 mm enthalten ist, vorzugsweise zwischen 0,2 und 5 mm enthalten ist.

9. Elektrischer und fluidischer Zwischenverbinder (8) nach einem der vorhergehenden Ansprüche, wobei die Löcher entlang Linien ausgerichtet sind, die zueinander parallel und gleichmäßig beabstandet sind.

10. Hochtemperatur-Wasserelektrolysereaktor, umfassend wenigstens einen Stapel von elementaren Elektrolysezellen (C1, C2,...Cn), die jeweils gebildet sind mit einer Kathode (2.1, 2.2), einer Anode (4.1, 4.2) und einem zwischen der Kathode und der Anode eingefügten Elektrolyten (6.1, 6.2), wobei ein Zwischenverbinder (8) nach einem der Ansprüche 2 bis 9 zwischen zwei benachbarten elementaren Zellen angeordnet ist, wobei der Zwischenverbinder (8) in elektrischem Kontakt mit einer Elektrode einer der zwei elementaren Zellen und einer Elektrode der anderen der zwei elementaren Zellen ist.

11. Reaktor nach Anspruch 10, wobei die zweite Scheibe (81) des Zwischenverbinders in direktem mechanischen Kontakt mit der Kathode (2.1, 2.2) einer (C1) der zwei elementaren Zellen ist.

12. Reaktor nach Anspruch 10 oder 11, wobei die erste Scheibe (80) des Zwischenverbinders in direktem mechanischen Kontakt mit einer Anode einer der zwei elementaren Zellen ist.

13. Reaktor nach Anspruch 10 oder 11, wobei die erste Scheibe (80) des Zwischenverbinders in direktem mechanischen Kontakt mit einem porösen Element (10) aus elektrisch leitendem Material ist, wobei das poröse Element (10) selbst wiederum in direktem Kontakt mit einer Anode (4.1, 4.2) einer (C2) der zwei elementaren Zellen ist.

14. Reaktor nach Anspruch 13, wobei das poröse Element (10) eine dünne Schicht aus Lanthanmanganit, dotiert mit Strontium, ist, die auf der Anode (4.1, 4.2) aufgebracht ist.

15. Verwendung eines Reaktors nach einem der Ansprüche 10 bis 14 für die Wasserstoffproduktion.

## Claims

1. Device (8) forming an electric and fluid interconnector for a reactor for water electrolysis, consisting of a metal part having a constant thickness, which is delimited by two parallel planes, said metal part including:
- a chamber within
- a plurality of holes distributed over the surface, substantially perpendicular to one of the two planes, and opening both onto the latter and into said chamber,
said chamber being created within said metal part and opening in addition to the outside in an area that is different from the plane onto which the plurality of holes opens.

2. Electric and fluid interconnector (8) according to claim 1, comprising two metal plates (80, 81) assembled together at their periphery, the first plate (80) comprising the plurality of holes (800) distributed over the surface, substantially perpendicular to its thickness and opening onto its two planar sides, the second plate (81) comprising at least one groove (811) opening onto one of the sides of the first plate opposite the plurality of holes, the space delimited between the groove and the first plate constituting the chamber (9).

3. Electric and fluid interconnector (8) according to claim 2, wherein the second plate (81) comprises a plurality of grooves (811) parallel to each other, regularly spaced apart, and opening onto one of the sides of the first plate opposite the plurality of holes.

4. Electric and fluid interconnector (8) according to claim 2 or 3, wherein the second plate (81) comprises another plurality of grooves (810) parallel to each other, regularly spaced apart, and opening to the outside.

5. Electric and fluid interconnector (8) according to one of claims 2 to 4, wherein the two plates are assembled together via welding or brazing

6. Electric and fluid interconnector (8) according to one of the previous claims, wherein the metal part is made from an alloy sheet resistant to oxidation, such as a ferritic stainless steel.

7. Electric and fluid interconnector (8) according to one of the previous claims, wherein the holes have a circular cross-section with a diameter between 0.05 and 5 mm, preferably between 0.1 and 1 mm.

8. Electric and fluid interconnector (8) according to one of the previous claims, wherein the distance between the centre of two adjacent holes is between 0.1 and 10 mm, preferably between 0.2 and 5 mm.

9. Electric and fluid interconnector (8) according to one of the previous claims, wherein the holes are aligned along lines that are parallel to each other and regularly spaced apart.

10. Reactor for high-temperature water electrolysis, comprising at least one stack of electrolytic unit cells (C1, C2...Cn), each formed from a cathode (2.1, 2.2), an anode (4.1, 4.2) and an electrolyte (6.1, 6.2) inserted between the cathode and the anode, an interconnector (8) according to one of claims 2 to 9 being arranged between two adjacent unit cells, the interconnector (8) being in electrical contact with an electrode of one of the two unit cells and with an electrode of the other of the two unit cells.

11. Reactor according to claim 10, wherein the second plate (81) of the interconnector is in direct mechanical contact with the cathode (2.1, 2.2) of one (C1) of the two unit cells.

12. Reactor according to claim 10 or 11, wherein the first plate (80) of the interconnector is in direct mechanical contact with an anode of one of the two unit cells.

13. Reactor according to claim 10 or 11, wherein the first plate (80) of the interconnector is in direct mechanical contact with a porous element (10) made from an electrically conductive material, the porous element (10) being itself in direct contact with an anode (4.1, 4.2) of one (C2) of the two unit cells.

14. Reactor according to claim 13, wherein the porous element (10) is a thin layer of strontium-doped lanthanum manganite, deposited on the anode (4.1, 4.2).

15. Application of a reactor according to one of claims 10 to 14 for producing hydrogen.
